# EUROPEAN PATENT APPLICATION

(11) **EP 2 354 189 A1**
(43) Date of publication of application: **10.08.2011**
(21) Application number: 11153816.1
(22) Date of filing: 09.02.2011
(51) Int. Cl.: C09C 1/00

(54) **Black metallic effect pigments**

(30) Priority: 09.02.2010 US 302788 P; 01.02.2011 US 18921
(71) Applicant: Silberline Manufacturing Co., Inc., Tamaqua PA 18252-0420 (US)
(72) Inventor: Likibi, Parfait Jean Marie, Mount Pleasant, SC 29466 (US); Lin, Hai Hui, Naperville, IL 60564 (US); Pitchimani, Rajasekar, Breinigsville, PA 18031 (US)
(74) Representative: Hart-Davis, Jason

(57) **Abstract**

A pigment having a black metallic effect, such that when the pigment is viewed at a right angle relative to the outer surface, the pigment appears metallic, and such that when the pigment is viewed at shallow angles relative to the outer surface, the pigment appears black. The pigment herein has a high reflective opaque or semi-opaque metal substrate and a layer of high refractive index black material coated on the outer surface of the substrate.

## Description

### FIELD

This disclosure herein relates generally to pigments (which are intended to be used in applications such as, but not limited to, coatings, inks and plastics), and particularly to the design of a pigment having a black metallic effect, such that when the pigment is viewed at a right angle relative to the pigment's outer surface, the pigment appears metallic, and such that when the pigment is viewed at angles other than a right angle relative to the outer surface, the pigment appears black depending on the thickness.

### BACKGROUND

Black pigments are known. For example, black pigments have been formed using black iron oxide on a mica substrate. Such pigments provide black color, but have weak to no metallic appearance (if at all) and lack sufficient smoothness. Other types of black pigments have been reported, but do not achieve a metallic black color, for example due to scattering of light by carbon.

Chalcogenide glass materials, such as Ge₂₈Sb₁₂Se₆₀, are known and commercially available. Such chalcogenide glass materials are known for their transparency to infrared wavelengths and have been used in, for example fiber optics, biomimetization, and photonics applications.

Chalcogenide materials also have been reported as a potential high refractive material for use in making effect pigments on glass substrates. Nonetheless, advancements and improvements may be made upon existing uses of chalcogenide glass materials so as to provide an effective black metallic pigment.

### SUMMARY

Generally, a design of a pigment having a black metallic effect is described herein. In some embodiments, the pigment(s) has a layer of high refractive index black material coated on an outer surface of a metal reflective substrate. The layer of high refractive index black material provides high visible absorption to give a dark appearance (e.g. black color effect) while giving high reflectivity at an angle (e.g. metallic effect). For example, the pigment(s) herein provide effects, such that when the pigment is viewed at a right angle relative to the pigment's outer surface, the pigment appears metallic, and such that when the pigment is viewed at angles other than a right angle relative to the outer surface, the pigment appears black.

The pigment(s) herein can be used for coating applications such as, but not limited to, automotives as well as various inks and plastics.

In one embodiment, a pigment includes a reflective opaque or semi-opaque metal substrate having an outer surface.

In some embodiments, the high refractive index black material is a layer of glass material, for example, a black chalcogenide glass layer having a high refractive index that is coated about the outer surface of the substrate. The outer layer also could be non-chalcogenide black glass, e.g. a glass ceramic.

In other embodiments, the outer layer also may be a high refractive black material other than glass, such as for example, other black materials such as but not limited to CuInGaSe, strontium, silicon, germanium, carbides and carbonitrides of elements that are black in appearance, e.g., carbides and carbonitrides of boron, vanadium, molybdenum, niobium, titanium, silicon, and of alloys of such elements.

Generally, the reflective opaque or semi-opaque metal substrate and the high refractive index black material form a black metallic pigment, such that when the pigment is viewed at a right angle relative to the outer surface, the pigment appears metallic, and such that when the pigment is viewed at angles other than a right angle relative to the outer surface, the pigment appears black.

In one embodiment, the reflective opaque or semi-opaque metal substrate could be, but not limited to, aluminum, silver, tin, gold, or any reflective surface. In another example, the reflective opaque or semi-opaque metal substrate could be a metallic reflective surface such as Al, Ag, S, Au and Ti.

In one embodiment, the refractive index of the chalcogenide glass layer is at least 1.5.

In one embodiment, when the layer of high refractive index black material is a layer of chalcogenide glass, it has the general formula YZ, where Y for example could be any of Ge, Sb, Si, As, or a mixture of these in the range of about 15-70% (element percent), and where Z for example can be any of S, Se, Te, or a mixture of these in the range of about 30 to 85% (element percent). As some examples, either Ge or Si are included as Y thereby giving a broad range of Ge or Si based chalcogenide glasses. When a chalcogenide glass is used, any of S, Se, Te (or a mixture of these) is present to make up the chalcogenide glass. In other embodiments, further metallic or non-metallic elements can be added.

More generally, when the high refractive index black material is a glass layer, it can have the formula, for example, AₓB_{y}C_{z} where for example A= Y above; for example B = Y above or one or more other metallic or non-metallic elements; and for example C= Z above, where x, y and z are chosen depending on whether the glass layer is a chalcogenide glass or a glass ceramic. It will be appreciated that additional metallic and non-metallic elements can also be added to the glass layer.

In one embodiment, the high refractive index black material is coated onto the reflective opaque or semi-opaque metal substrate by physical vapor deposition.

In other embodiments, a pigment includes the high refractive index black material alone (e.g. chalcogenide glass layer alone without the reflective opaque metal substrate). In such cases, the thickness of the high refractive index black material in some embodiments is at least 1 micron. In other embodiments, the thickness is 1.5 micron; alternately, the thickness is 2 micron or more.

### BRIEF OF THE DRAWINGS

Fig. 1 shows a schematic side sectional view of one embodiment of the disclosed coated pigment.
Fig. 2 shows a schematic side of one embodiment of the disclosed pigment.
Fig. 3 shows a chart of L* values as a function of angles for a black metallic pigment herein.
Fig. 4 shows a chart of Chroma values as a function of angles for a black metallic pigment herein.
Fig. 5 shows a chart of Hue values as a function of angles for a black metallic pigment herein.
Fig. 6 shows a* versus b* values for a black metallic pigment herein when compared to other existing black pigments.
Fig. 7 shows microscopy results, where roughness of an aluminum substrate was measured using Atomic Force Microscopy (AFM) and the root mean square roughness of the aluminum substrate was obtained.
Fig. 8 shows microscopy results, where roughness of a GeSbSe layer on a GeSbSe/aluminum bi-layer film (on a glass substrate) was measured using Atomic Force Microscopy (AFM) and the root mean square roughness of the GeSbSe was obtained.
Fig. 9 shows Scanning Electron Microscopy (SEM) image of the flakes after sizing.

### DETAILED DESCRIPTION

Generally, a design of a coated pigment or pigment having a black metallic effect is described herein. In one example, a layer of high refractive index black material is coated on an outer surface of a metal reflective or semi-opaque substrate so as to form a coated pigment. The layer of high refractive index black material provides high visible absorption to give a dark appearance while giving high reflectivity at an angle (e.g. metallic effect), and the high reflectivity is further enhanced when backed by an opaque or semi-opaque reflecting metal substrate.

Alternatively, the design of a pigment could be the high refractive index black material forming the pigment. Such a design can give the same effect as the coated pigment having a layer of high refractive index black material coated an an outer of a metal reflective substrate.

The coated pigment and pigment described herein provide effects, such that when the coated pigment or pigment is viewed at a right angle relative to the coated pigment or pigment's outer surface, the coated pigment or pigment appears metallic, and such that when the coated pigment or pigment is viewed at angles other than a right angle relative to the outer surface, the coated pigment or pigment appears black.

The coated pigment and pigment described herein can be used for coating applications such as, but not limited to, automotive as well as various inks and plastics. That is, in appropriate circumstances, it is to be realized that the concepts herein can be applied to other applications as well.

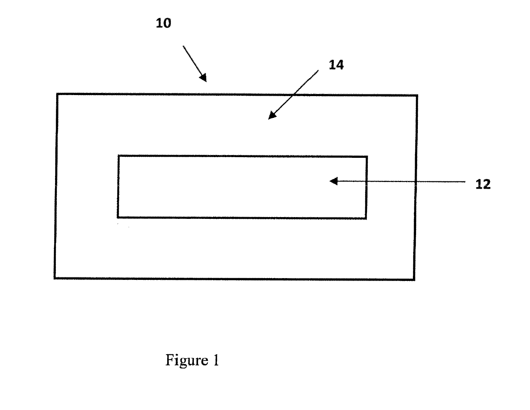

In one embodiment, Fig. 1 shows a coated pigment 10 that includes a reflective opaque or semi-opaque metal substrate 12. A layer of high refractive index black material 14 is coated about the outer surface of the reflective opaque or semi-opaque metal substrate 12. In some embodiments, the layer of high refractive index black material 14 is a black glass layer, such as a black chalcogenide glass. It will be appreciated that the layer 14 may not be chalcogenide glass, but may be a non-chalcogenide black glass (e.g. ceramic glass). As shown in Fig. 1, the reflective opaque or semi-opaque metal substrate 12 is sandwiched between the outer layers of chalcogenide glass. In some embodiments, the above coated pigment 10 may have an additional protection layer (not shown). The additional protection layer can be made of any material suitable for protecting the coated pigment 10 from damage. In one example, the additional protection layer includes a Schott SF11 glass. In one embodiment, the additional protective layer is disposed as the outside layer over the outermost layer of the substrate 12 and layer 14 structures.

In one embodiment, the reflective opaque or semi-opaque metal substrate 12 is infrared reflective and the layer of high refractive index black material 14 is infrared transparent.

The layer of high refractive index black material 14 has a refractive index, where the reflective opaque or semi-opaque metal substrate 12 and the layer of high refractive index black material 14 form a black metallic pigment, such that when the pigment 10 is viewed at a right angle relative to the outer surface of the coated pigment 10, the coated pigment 10 appears metallic, and such that when the coated pigment 10 is viewed at angles other than a right angle relative to the outer surface of the coated pigment 10, the coated pigment 10 appears black. That is, the overall arrangement of the coated pigment 10 can give a metallic appearance (highly reflective) when viewed at right angles and can give a black appearance when viewed at an angle.

With further reference to the reflective opaque or semi-opaque metal substrate 12, the reflective opaque or semi-opaque metal substrate 12 in some examples is at least one metal selected from the group consisting of aluminum, silver, copper, gold, tin, tantalum, titanium, ruthenium, rhodium, platinum, palladium, alloys thereof, and combinations thereof. In one example, the reflective substrate 12 is an opaque material such as aluminum.

In some embodiments, the reflective opaque or semi-opaque metal substrate 12 is a thin flake with the layer of high refractive index black material 14 disposed on the flake 12 as a thin film. For example, the substrate 12 can be a platelet-shaped material(s) with the layer of high refractive index black material 14 disposed on the outer surface of the substrate 12 as a thin film. In one example, the platelet-shaped material(s) has a thickness from about 30 nm to about 1000 nm, alternately about 50 nm to about 700 nm, alternately about 80 nm to about 200 nm.

In some embodiments, the layer of high refractive index black material 14 has a thickness from about 400 nm to about 2000 nm, alternately about 500 nm to about 1000 nm, alternately about 600 nm to about 800 nm. In exemplary embodiments, the coated pigment 10 has an overall thickness in the range of about 400 nm to about 3000 nm, alternately about 600 nm to about 2000 nm, alternately about 700 nm to about 1000 nm.

The thicknesses mentioned above can be observed by an atomic force microscope (AFM).

In one embodiment, a chalcogenide glass is used as the layer of high refractive index black material 14. When a layer of chalcogenide glass is used, in one embodiment the chalcogenide has the general formula YZ. In one example, Y is at least one selected from the group consisting of Ge, Sb, Si, As, and a mixture of Ge, Sb, Si and/or As. In another example, Y is at least one selected from the group consisting of Ge, Sb, Si, As, and a mixture of Ge, Sb, Si and/or As in the range of about 15-70% (atomic/element percent). In yet another example, Z is at least one selected from the group consisting of S, Se, Te, and a mixture of S, Se and/or Te. In another example, Z is at least one selected from the group consisting of S, Se, Te, and a mixture of S, Se and/or Te in the range of about 30 to 85% (atomic/element percent). As some examples, either Ge or Si is included as Y thereby giving a broad range of Ge or Si based chalcogenide glasses. When a chalcogenide glass is to be used, any of S, Se, Te or a mixture of these may be present to make up the chalcogenide glass. In other embodiments, further metallic or non-metallic elements can be added.

More generally, the layer of high refractive index black material 14 can be a black glass material, such as for example, a chalcogenide or ceramic glass. In some embodiments, the high refractive index black material can have the formula, for example, AₓB_{y}C_{z}. In one example, A= Y. In one instance, Y is at least one selected from the group consisting of Ge, Sb, Si, As, and a mixture of Ge, Sb, Si and/or As. In another instance, Y is at least one selected from the group consisting of Ge, Sb, Si, As, and a mixture of Ge, Sb, Si and/or As in the range of about 15-70% (atomic/element percent). In another example, B = Y or one or more other metallic or non-metallic elements. In yet another example, C = Z. In one instance, Z is at least one selected from the group consisting of S, Se, Te, and a mixture of S, Se and/or Te. In another instance, Z is at least one selected from the group consisting of S, Se, Te, and a mixture of S, Se and/or Te in the range of about 30 to 85% (atomic/element percent). As some examples, either Ge or Si is included as Y thereby giving a broad range of Ge or Si based chalcogenide glasses. In yet another example, the values x, y and z can be determined from the type of glass that is utilized, that is, whether the glass is a chalcogenide glass or a glass ceramic. In some embodiments, C can be partly replaced by Sn and/or Bi, for example in a formula of Sn-Sb-Bi-Se. It will be appreciated that additional metallic and non-metallic elements can also be added to the formula AₓB_{y}C_{z} for the glass layer.

In one embodiment, the layer of high refractive index black material 14 includes a chalcogenide glass having the formula Ge₂₈Sb₁₂Se₆₀. In other examples, the layer of high refractive index black material 14 may include GeSbSe, GeSe, GeSeTe, GeSeSn, and/or GeSeSnTe.

As another example, the layer of high refractive index black material 14 in some embodiments is not a glass layer. For example, the layer of high refractive index black material 14 may be composed of black materials, such as for example, CuInGaSe, strontium, silicon, germanium, and carbides and/or carbonitrides of elements that are black in appearance, e.g., carbides and carbonitrides of boron, vanadium, molybdenum, niobium, titanium, silicon, and of alloys of such elements.

The layer of high refractive index black material 14 can have a thickness that is suitable for coating the disclosed coated pigment 10. The thicknesses of the layer of high refractive index black material 14 herein means the total thickness of the layer 14 without any other layer, e.g. the protective layer. In one example, the thickness of the layer 14 is from about 1000nm to about 2000nm. In another example, the layer 14 is about 1000 nm. In yet another example, the thickness of the layer 14 is about 1500 nm. In yet another example, the thickness of the layer 14 is about 2000 nm. In some embodiments, the overall thickness of the coated pigment 10, which includes the thicknesses of the layer of high refractive index black material 14 and any other layer such as a protective layer is about 3000nm.

In one embodiment, when a chalcogenide glass is used as the layer of high refractive index black material 14, the chalcogenide glass can contain silicon and may be used in combination with any of the other chalcogenide materials above. For example, the layer of high refractive index black material 14 can be a chalcogenide glass that includes, but is not limited to, at least one selected from the group consisting of SiSbSe and SiSe. Another example is a chalcogenide glass layer with optional metallic or non-metallic elements added like Sn-Sb-Bi-Se.

In some embodiments, regardless of the material that is used for the layer of high refractive index black material 14, the refractive index is at least greater than 1.5, and may be about 2.6 or at least about 2.6 in some instances. Generally, it will be appreciated that the layer of high refractive index black material 14 can have a refractive index in the range of about 1.5 or more, or in some cases about 2.0 or more, or in other cases about 2.5 or more.

In other examples, the refractive index may be higher than 2.5. For example, raw materials such as silicon (e.g. refractive index (RI) of about 3.4), germanium (e.g. RI of about 4.5), and silicon carbide (e.g. RI of about 2.7) can contribute to higher values of refractive index.

The refractive index is measured by an ellipsometry technique using polarized visible light under room temperature, i.e., between 18 to 25 degrees C. The measured refractive index values do not vary significantly between these temperatures. For example, the layer of high refractive index black material 14 can have the following thermal change (dn/dT, where n is refractive index and T is temperature) between 18 to 25 C: 76 x 10-6/K (3.4µm); 91 x 10-6/K (10.6µm). An exemplary room temperature is at 21.5 degrees C.

The layer of high refractive index black material 14 has certain color absorbing effects that can thereby allow the pigment to appear black when viewed at shallow angles. That is, the layer of high refractive index black material 14 allows for the coated pigment 10 to appear black when viewing it at angles that are less than 90 degrees, e.g. looking at the coated pigment 10 other than straight on. That is, the coated pigment 10 can provide the effect where it looks shiny black when viewed at a shallow angle and metallic when viewed at about a right angle. It will be appreciated that the coated pigment 10 may start to lose its black appearance when viewing it at angles slightly off 90 degrees, e.g. looking at the coated pigment 10 almost straight on. Generally, as the view is moved away from 90 degrees, the black color rather than the metallic appearance becomes more prominent, and likewise when the view is moved closer to 90 degrees the metallic appearance can become more prominent and the black color may lose its prominence. It also will be appreciated that the higher the refractive index of the black material, the higher the refractivity that can be obtained and, when coated onto the reflective opaque or semi-opaque metal substrate, the metallic effect also can be obtained.

In one embodiment of a method of preparing the coated pigment 10, for example when a chalcogenide glass layer is used, the high refractive index black material can be coated onto the reflective opaque or semi-opaque metal substrate 12 by physical vapor deposition (PVD), which is known. For example, the coated pigment 10 herein can be manufactured by such processes as, but not limited to, thermal evaporation, E-beam, and sputter deposition. Using PVD can provide a smooth pigment structure with uniform thickness, which can further provide a mirror-like effect. The coated pigment 10 herein can be manufactured, for example using PVD, to produce a coated pigment with a very, smooth surface texture, having a roughness of the order of about tens of nanometers, but can also have a roughness as low as 15nm or less. In one example, the roughness is significantly less, for example, when compared to roughness in cases showing at least 0.2µm in irregularity. Such roughness can be observed by an atomic force microscope (AFM).

In another embodiment, the coated pigment 10 may be used in a coating composition. The coating composition includes the coated pigment 10 and a carrier. The "carrier" component includes the base liquid or solvent, film-forming components, and related additives. Carriers include, but are not limited to, the following: acrylic emulsions, water reducible alkyl resin systems, water reducible alkyl/melamine cross-linked systems, waterborne epoxy systems, polyester emulsions, and water reducible polyester/melamine coatings.

In yet another embodiment, the coated pigment 10 may be used in a coating in an article. The article includes a coating that includes the coated pigment 10.

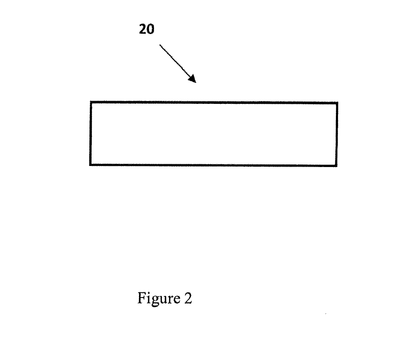

In another embodiment, Fig. 2 shows a pigment 20 that includes a high refractive index black material. In some embodiments, the high refractive index black material is a black glass. In one example, the black glass is a black chalcogenide glass. In another example, the black glass may be a non-chalcogenide black glass (e.g. ceramic glass).

In one instance, a chalcogenide glass is used as the high refractive index black material. In this instance, the chalcogenide glass has the general formula YZ. In one example, Y is at least one selected from the group consisting of Ge, Sb, Si, As, and a mixture of Ge, Sb, Si and/or As. In another example, Y is at least one selected from the group consisting of Ge, Sb, Si, As, and a mixture of Ge, Sb, Si and/or As in the range of about 15-70% (atomic/element percent). In yet another example, Z is at least one selected from the group consisting of S, Se, Te, and a mixture of S, Se and/or Te. In another example, Z is at least one selected from the group consisting of S, Se, Te, and a mixture of S, Se and/or Te in the range of about 30 to 85% (atomic/element percent). As some examples, either Ge or Si is included as Y thereby giving a broad range of Ge, or Si based chalcogenide glasses. When a chalcogenide glass is to be used, any of S, Se, Te (or a mixture of these) may be present to make up the chalcogenide glass. In other embodiments, further metallic or non-metallic elements can be added.

More generally, the high refractive index black material can be a black glass material, such as for example, a chalcogenide or ceramic glass. In some embodiments, the high refractive index black material can have the formula, for example, AₓB_{y}C_{z}. In one example, A= Y. In one instance, Y is at least one selected from the group consisting of Ge, Sb, Si, As, and a mixture of Ge, Sb, Si and/or As. In another instance, Y is at least one selected from the group consisting of Ge, Sb, Si, As, and a mixture of Ge, Sb, Si and/or As in the range of about 15-70% (atomic/element percent). In another example, B = Y or one or more other metallic or non-metallic elements. In yet another example, C = Z. In one instance, Z is at least one selected from the group consisting of S, Se, Te, and a mixture of S, Se and/or Te. In another instance, Z is at least one selected from the group consisting of S, Se, Te, and a mixture of S, Se and/or Te in the range of about 30 to 85% (atomic/element percent). As some examples, either Ge or Si is included as Y thereby giving a broad range of Ge or Si based chalcogenide glasses. In yet another example, the values x, y and z can be determined from the type of glass that is utilized, that is, whether the glass is a chalcogenide glass or a glass ceramic. In some embodiments, C can be partly replaced by Sn and/or Bi, for example in a formula of Sn-Sb-Bi-Se. It will be appreciated that additional metallic and non-metallic elements also can be added to the formula AₓB_{y}C_{z} .

In one embodiment, the high refractive index black material is a chalcogenide glass having the formula Ge₂₈Sb₁₂Se₆₀. In other examples, the high refractive index black material may be, but is not limited to, GeSbSe, GeSe, GeSeTe, GeSeSn, and/or GeSeSnTe.

As another example, the high refractive index black material in some embodiments is not a glass layer. For example, the layer of high refractive index black material may be composed of black materials, such as for example, CuInGaSe, strontium, silicon, germanium, and carbides and/or carbonitrides of elements that are black in appearance, e.g., carbides and carbonitrides of boron, vanadium, molybdenum, niobium, titanium, silicon, and of alloys of such elements.

In other examples, the high refractive index black material is made of the same material included in the layer of high refractive index black material 14 of the coated pigment 10 as described above.

In other embodiments, when a chalcogenide glass is used as the high refractive index black material, the chalcogenide glass can contain silicon and may be used in combination with any of the other chalcogenide materials above. For example, the high refractive index black material can be a chalcogenide glass that includes, but is not limited to, at least one selected from the group consisting of SiSbSe and SiSe. Another example is a chalcogenide glass layer with optional metallic or non-metallic elements added like Sn-Sb-Bi-Se.

The pigment 20 has a refractive index such that when the pigment 20 is viewed at a right angle relative to the outer surface of the pigment, the pigment 20 appears metallic, and such that when the pigment 20 is viewed at angles other than a right angle relative to the outer surface of the pigment, the pigment 20 appears black. That is, the pigment 20 can give a metallic appearance (highly reflective) when viewed at right angles and can give a black appearance when viewed at an angle.

In some embodiments, regardless of the material that is used for the high refractive index black material, the refractive index is at least greater than about 1.5. In another example, the refractive index is about 2.6. In yet another example, the refractive index is at least about 2.6. Generally, it will be appreciated that the high refractive index black material can have a refractive index in the range of about 1.5 or more, or in some cases about 2.0 or more, or in other cases about 2.5 or more.

In other examples, the refractive index may be higher than 2.5. For example, raw materials such as silicon (e.g. refractive index (RI) of about 3.4), germanium (e.g. RI of about 4.5), and silicon carbide (e.g. RI of about 2.7) can contribute to higher values of refractive index.

The refractive index is measured by an ellipsometry technique using polarized visible light under room temperature, i.e., between 18 to 25 degrees C. The measured refractive index values do not vary significantly between these temperatures. For example, the layer of high refractive index black material can have the following thermal change (dn/dT, where n is refractive index and T is temperature) between 18 to 25 C: 76 x 10-6/K (3.4µm); 91 x 10-6/K (10.6µm). An exemplary room temperature is at 21.5 degrees C.

In one example, the pigment 20 has a thickness of about 1000 to about 2000 nm. In yet another example, the pigment 20 has a thickness of about 1000 nm, alternately about 1500 nm, alternately about 2000 nm. In yet another example, the pigment 20 has a thickness of about 2000 nm or more. Such thicknesses can be observed by an atomic force microscope (AFM).

It will be appreciated that the pigment 20 may also have an additional protection layer (not shown). In one example, the additional protection layer can be made of any material suitable for protecting the pigment 20 from damage. In one example, the additional protection layer includes a Schott SF11 glass. In one embodiment, the additional protective layer is disposed as the outermost layer of the pigment 20.

In yet another embodiment, the pigment 20 may be used in a coating composition. The coating composition includes the pigment 20 and a carrier. The "carrier" component includes the base liquid or solvent, film-forming components, and related additives. Carriers include, but are not limited to, the following: acrylic emulsions, water reducible alkyl resin systems, water reducible alkyl/melamine cross-linked systems, waterborne epoxy systems, polyester emulsions, and water reducible polyester/melamine coatings.

In one embodiment, the pigment 20 may be used in a coating in an article. The article includes a coating that includes the pigment 20.

### Examples

### Example 1

### a) Preparation of disclosed coated pigment

Commercially available bulk chalcogenide glasses including a Ge-based black chalcogenide glass system are used as a raw material to deposit a chalcogenide layer using aluminum as substrate. The chalcogenide layer is deposited by thermal evaporation using a current of 75A at about 5x10⁻⁷ Torr with no substrate rotation. A coated pigment with 1. 11 µm thick GeSbSe on either side of a 85 nm thick aluminum substrate is formed.

### b) Color Testing

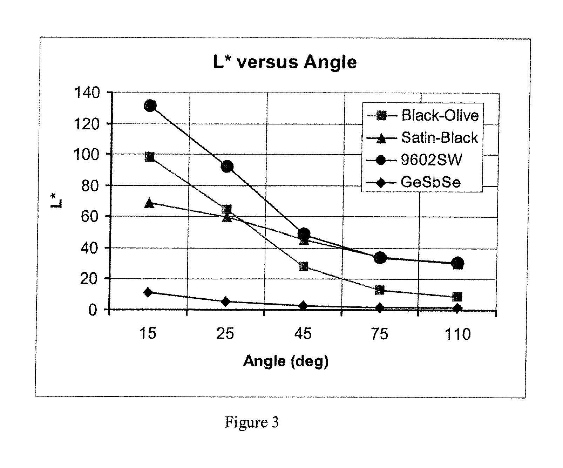

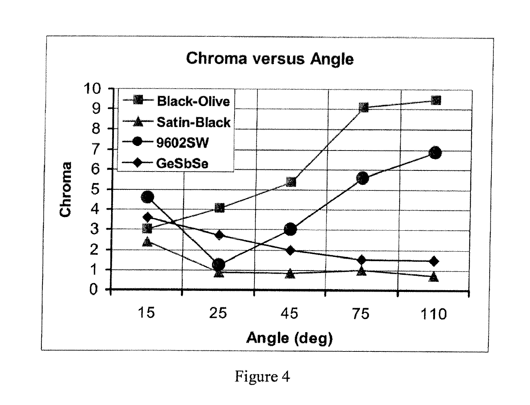

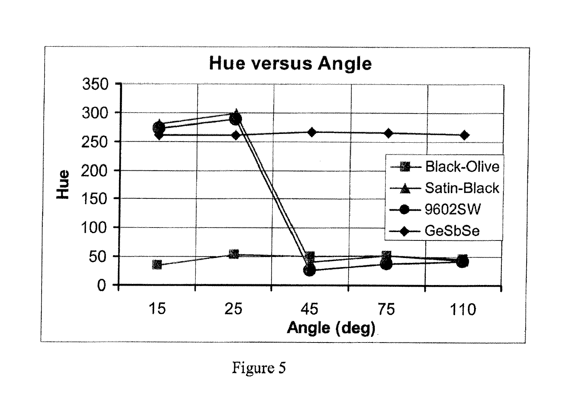

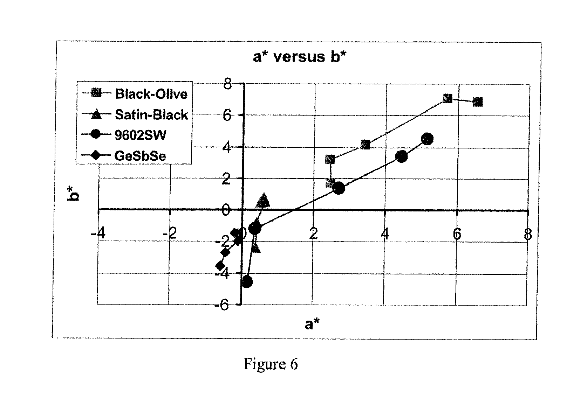

Color testing was performed using known CIELAB techniques, to evaluate L, a, and b values. CIE lab values for the coated pigment prepared in a) is compared to the other black pigments (BASF's Black Olive, EMD's 9602 SW and CIBA's Satin Black) existing in the market. Figure 3, 4 and 5 show the L* values, Chroma values and Hue values as a function of angles for the above pigments with that of other black pigments existing in the market. Figures 6 shows a* versus b* values for the above chalcogenide based black pigments compared to other existing black pigments.

### c) Microscopy Analysis

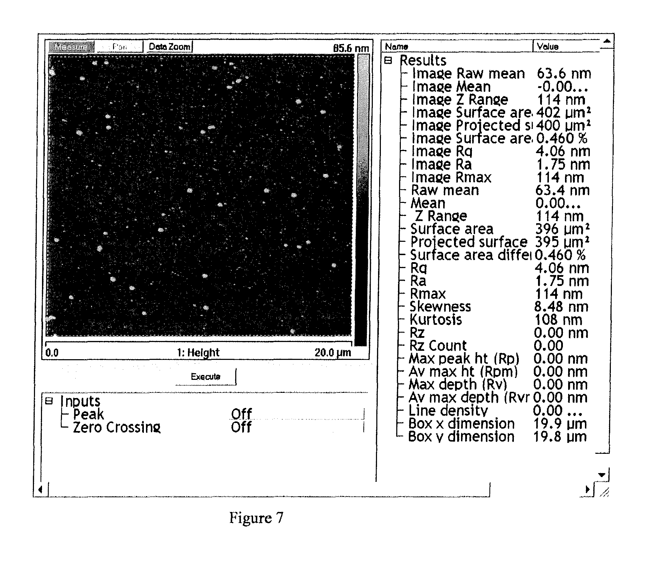

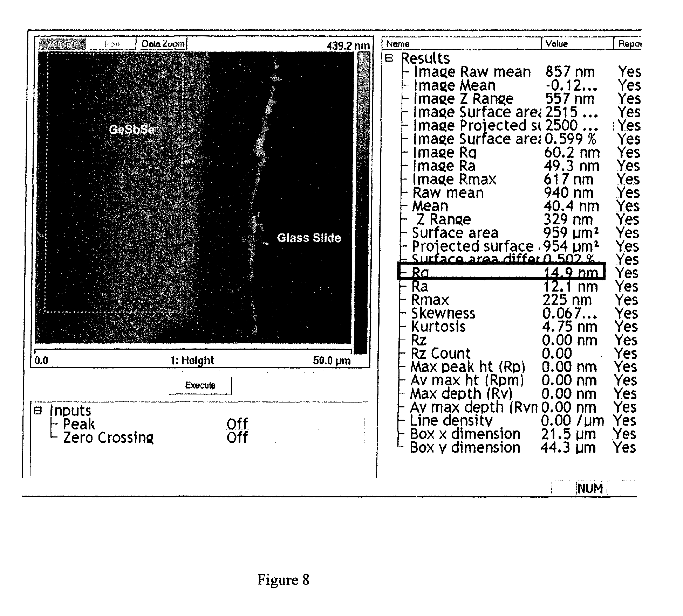

The thickness of the layers of the coated pigment prepared in a) was measured by Atomic Force Microscopy (AFM). With further reference to the roughness, Fig. 7 shows that the roughness of the aluminum substrate can also be measured by AFM, where in some examples the root mean square roughness of the aluminum substrate was found to be 4.06 nm. It has been observed that when the high refractive index black material is coated on the substrate, e.g. chalcogenide glass layer having the formula GeSbSe, the added roughness was approximately 15 nm using a similar evaluation and analysis (e.g. by AFM). Figure 8 shows an AFM image on the GeSbSe surface of a bi-layer film having GeSbSe on an aluminum substrate. The bi-layer film was made on a glass slide. The roughness of GeSbSe is observed to be about 15 nm. The resulting product shown in Fig. 8 can look very similar to what is shown in Fig. 7, as the overall roughness is of the order of a couple or few tens of nanometer. It would be appreciated that adding a protective layer, if desired, would not substantially alter the surface roughness beyond a few tens of nanometers.

The layer of high refractive index black material provides high visible absorption to give a dark appearance (black color) while giving high reflectivity at an angle (e.g. metallic effect), and the high reflectivity is further enhanced when backed by an opaque or semi-opaque reflecting metal. For example, the coated pigment prepared in a) provides effects, such that when the coated pigment is viewed at about a right angle relative to the coated pigment's outer surface, the coated pigment appears metallic, and such that when the coated pigment is viewed at angles other than about a right angle relative to the outer surface, the coated pigment appears black.

### Example 2

### a) Preparation of disclosed pigment

A film of GeSbSe only was made on a 2 mm polyester web that was hard coated with an organic release layer capable of being dissolved in a suitable solvent. The film was made by evaporating the GeSbSe onto the web by thermal evaporation. The film material was removed from the polyester web by dissolving the release layer in *N*-(4-nitrophenyl)-L-prolinol (NPP) solution. The film thus obtained was sized by placing the tip of Hielscher UP200H sonicator tip into the NPP solution containing the film material. The flakes were removed from the solution by centrifuging and drying in air.

### b) Scanning Electron Microscopy Analysis

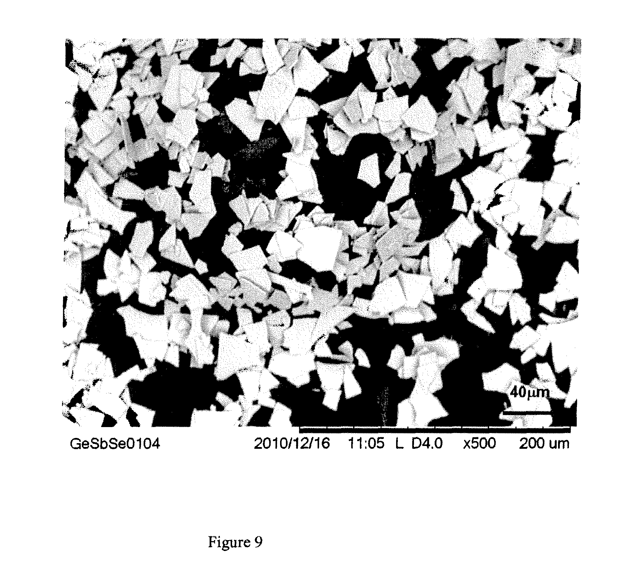

Figure 9 shows SEM image of the sized flakes prepared in a) after about 10 minutes of sonication. The size of the flakes was about 50 microns. In one implementation, the sized flakes can be filtered from the solvent and can be redispersed in a binder to make drawdown or spray outs.

While the disclosed coated pigments, pigments and methods have been described in conjunction with some particular embodiments, it will be apparent to one skilled in the art that other objects and refinements of the disclosed coated pigments, pigments and methods may be made within the purview and scope of the disclosure. The disclosure, in its various aspects and disclosed forms, is well adapted to the attainment of the advantages of others. The disclosed details are not to be taken as limitations on the claims.

## Claims

1. A coated pigment, comprising:
a reflective opaque or semi-opaque metal substrate having an outer surface; and
a layer of black material coated about the outer surface of the substrate,
wherein the layer of black material has a refractive index such that when the coated pigment is viewed at a right angle relative to an outer surface of the coated pigment, the coated pigment appears metallic, and such that when the coated pigment is viewed at angles other than a right angle relative to the outer surface of the coated pigment, the coated pigment appears black.

2. The coated pigment of claim 1, wherein the layer of black material is a chalcogenide glass layer.

3. The coated pigment of claim 2, wherein the chalcogenide glass layer includes at least one selected from the group consisting of GeSbSe, GeSe, GeSeTe, GeSeSn, and GeSeSnTe.

4. The coated pigment of claim 2, wherein the chalcogenide glass layer contains silicon.

5. The coated pigment of claim 1, wherein the refractive index of the layer of black material is at least about 2.6.

6. The coated pigment of claim 1, further comprising a protection layer.

7. The coated pigment of claim 1, wherein the substrate is at least one selected from the group consisting of aluminum, silver, copper, gold, tin, tantalum, titanium, ruthenium, rhodium, platinum, palladium, alloys thereof, and combinations thereof.

8. A pigment, comprising:
a black material having a refractive index such that when the pigment is viewed at a right angle relative to an outer surface of the pigment, the pigment appears metallic, and such that when the pigment is viewed at angles other than a right angle relative to the outer surface of the pigment, the pigment appears black.

9. The pigment of claim 8, wherein the black material is a chalcogenide glass layer.

10. The coated pigment of claim 9, wherein the chalcogenide glass layer includes at least one selected from the group consisting of GeSbSe, GeSe, GeSeTe, GeSeSn, and GeSeSnTe.

11. The coated pigment of claim 9, wherein the chalcogenide glass layer is Ge₂₈Sb₁₂Se₆₀.

12. The coated pigment of claim 8, wherein the refractive index of the black material is at least about 2.6.

13. A method of producing the coated pigment of claim 1, comprising:
coating the substrate with a chalcogenide glass layer by physical vapor deposition.

14. A coating composition, comprising:
the coated pigment of claim 1 or the pigment of claim 8, and
a carrier.

15. An article, comprising:
a coating that comprises the coated or claim 1 or the pigment of claim 8.
